# EUROPÄISCHE PATENTSCHRIFT

(11) **EP 1 319 881 B1**
(45) Veröffentlichungstag und Bekanntmachung des Hinweises auf die Patenterteilung: **09.11.2005**
(21) Anmeldenummer: 02026629.2
(22) Anmeldetag: 29.11.2002
(51) Int. Cl.: F16L 37/084, F16L 37/092

(54) **Steckverbinder für Kunststoffrohre**
Plug connector for plastic pipes
Connecteur à fiche pour tuyaux en plastique

(30) Priorität: 14.12.2001 DE 10161372
(43) Veröffentlichungstag der Anmeldung: 18.06.2003
(73) Patentinhaber: Seppelfricke Armaturen GmbH & Co., D-45881 Gelsenkirchen (DE)
(72) Erfinder: Heyka, Wilfried, 45659 Recklinghausen (DE)
(74) Vertreter: Schmidt, Frank-Michael

(56) Entgegenhaltungen:
- WO-A-02/070940
- DE-A- 2 754 984
- US-A- 4 722 558

## Beschreibung

Die Erfindung betrifft einen Steckverbinder für Kunststoffrohre nach dem Oberbegriff des Patentanspruchs 1 sowie ein Fittingprogramm mit einem Steckverbinder für Kunststoffrohre.

Kunststoffrohre kommen bei flüssigen oder gasförmigen Medien zum Einsatz. Sie sind mit geringem Aufwand herstellbar, haben ein niedriges spezifisches Gewicht und sind unempfindlich gegenüber einer Vielzahl von agressiven Substanzen. Im Vergleich zu Metallrohren sind Kunststoffrohre insbesondere nicht anfällig für Korrosion.
Zur Verbindung von Kunststoffrohren können gattungsgemäße Steckverbinder verwendet werden. Für eine "gute" Verbindung sind im wesentlichen zwei Faktoren maßgebend: Erstens muß die Verbindung nach außen hin zuverlässig abdichten. Zweitens wird eine hohe mechanische Zugfestigkeit gefordert, d.h. miteinander verbundene Rohre dürfen nur mit großer Kraft wieder auseinanderziehbar sein. Eine hohe mechanische Zugfestigkeit kann beispielsweise durch Reibschluß erreicht werden. Dabei muß das Rohr immer noch angemessen leicht in den Steckverbinder einsteckbar sein.

Aus der Praxis ist ein Steckverbinder bekannt, dessen erstes Klemmelement als geschlitzter Klemmring mit einer korund-beschichteten Innenseite ausgebildet ist. Der Gehäusedeckel weist auf seiner Innenseite eine konische Anlagefläche für das erste Klemmelement auf. Die Oberflächenrauhigkeit des ersten Klemmelements und die Klemmkraft bestimmen die Güte des Kraftschlusses zwischen dem Steckverbinder und dem Rohr. Bei der Montage wird ein Rohrabschnitt durch das zweite in das erste Klemmelement eingesteckt. Zur Überwindung des Reibwiderstandes des ersten Klemmelements müssen zum Teil erhebliche Kräfte aufgebracht werden. Unter Umständen läßt sich der Rohrabschnitt nur durch "Wippen" oder Drehen in das Gehäuse einführen. Dies ist wenig anwenderfreundlich. Ferner hat sich die Dichtungswirkung als unzureichend erwiesen.

In der zwischenveröffentlichten WO 02 070 940 A ist ein ähnlicher Steckverbinder für Kunststoffrohre beschrieben, bei dem der innere Klemmring von einer konischen Innenfläche des Gehäuses zusammengedrückt wird, wenn der Rohrabschnitt entgegen der Einschubrichtung bewegt wird. Auch bei diesem Steckverbinder müssen bei der Einführung des Rohrabschnitts relativ hohe Gegenkräfte überwunden werden, da ein Rückführungsring dem Rohrabschnitt bei dessen Durchführung einen relativ hohen Reibungswiderstand entgegenstellt. Der Rückführungsring hat beim Herausziehen des Rohres aus dem Verbindungsstück keine Funktion.

Aus der US 4,722,558 ist ein Rohrverbindungsstück bekann, in welchem eine ringförmige Kammer zur Aufnahme von Dicht-, Stütz- und Krallelementen sowie eines einzuführenden Rohrabschnitts ausgebildet ist. Ein in der Ringkammer eingeführter Rohrabschnitt drängt sowohl die Dichtlippe als auch die nach innen weisenden Krallen des Krallelements nach außen, wobei eine Krallwirkung des Krallelements auf die Außenfläche des Rohres stattfindet. Die Rückhaltkräfte werden bei dieser bekannten Konstruktion lediglich durch die Krallen des Krallelements auf die Außenfläche des Rohres zur Wirkung gebracht.

Dokument DE 2754984 zeigt einen Steckverbinder gemäß dem Oberbegriff des Anspruchs 1.

Der Erfindung liegt die Aufgabe zugrunde, einen Steckverbinder zu schaffen, der einfach zu montieren ist und gleichzeitig ein gute Dichtigkeit gewährleistet.

Ausgehend von dem Steckverbinder der eingangs angegebenen Art, wird die Aufgabe erfindungsgemäß durch die kennzeichnenden Merkmale des Patentanspruchs 1 gelöst. Hat es dieses erreicht, bewegt es dieses in Richtung auf das zweite Klemmelement mit der Folge, daß das erste Klemmelement in dessen Klemmbereich radial zusammengedrückt wird und damit den Rohrabschnitt im Gehäuse fixiert. Mit zunehmender Zugkraft steigt also auch die Klemmkraft des Steckverbinders, so daß er eine sichere und zuverlässige Verbindung schafft. Die bei hoher Zugkraft wirkende hohe Klemmkraft wird von der Klammer nur initiiert und teilweise mitgetragen, während den Hauptteil der Klemmkraft das erste Klemmelement liefert.

Die Klammer kann von beliebiger Form sein. Als besonders geeignet hat sich ein geschlossener oder teilgeöffneter Ring erwiesen, der zur Aufbringung der notwendigen Initial-Klemmkraft einen Umschließungswinkel von mindestens 180° aufweist. Auch denkbar ist eine z.B viereckige Ausführungsform der Klammer, wobei sich die Ecken an der Innenfläche des Gehäuses abstützen. Die Klammer kann mit Zähnen besetzt sein, die in Eingriff mit dem Rohrabschnitt treten.

In aller Regel wird das zweite Klemmelement eine konusförmige Innenfläche aufweisen, die als Anlagefläche für das erste Klemmelement dient. Beim Herausziehen des Rohrabschnitts wird also das erste Klemmelement in den zulaufenden Innenkonus des zweiten Klemmelements gepreßt und verklemmt dadurch den Rohrabschnitt. Zähne auf der Innenseite des ersten Klemmelements verstärken die Klemmwirkung. Zur besseren Verformung sollte das erste Klemmelement ferner in seinem Klemmbereich geschlitzt sein. Gleichermaßen möglich - wenn auch konstruktiv aufwendiger - ist die konische Ausbildung der Außenseite des ersten Klemmelements zum Eingriff in das zweite Klemmelement.

Die Montage des erfindungsgemäßen Steckverbinders kann dadurch noch erleichtert werden, daß auf das Ende des Rohrabschnitts Schmiermittel aufgetragen wird. Das Schmiermittel hat nur geringen Einfluß auf die Klemmkraft der Klammer. Bei dem bekannten Steckverbinder hingegen verbietet sich eine derartige Montagehilfe, da Schmiermittel zwar die Einführkraft herabsetzt, jedoch im gleichen Maße auch die Klemmkraft aufhebt.

Vorzugsweise weist die Klammer einen in Einsteckrichtung des Rohrabschnitts deutlich geringeren Widerstand auf als in Ausziehrichtung. Dies erleichtert die Montage - also das Einstecken - des Rohrabschnitts wesentlich und gewährleistet gleichzeitig eine hohe Zugfestigkeit. Die unterschiedlichen Widerstände in beide Richtungen können beispielsweise durch einen teilgeöffneten Klemmring zur Verfügung gestellt werden, dessen einsteckseitige Innenfläche einen flacheren Neigungswinkel aufweist als die gegenüberliegende Innenfläche. Beide Flächen bilden einen umlaufenden Keil, der in die Außenfläche des eingesteckten Rohres eingreift.

Besonders vorteilhaft ist eine tellerfederartige Ausbildung der Klammer. Die Tellerfedern weisen (vorzugsweise gegen die Ausziehrichtung angestellte) Zähne auf, die in die Oberfläche des Rohres eingreifen. Mit zunehmendem Zug nimmt auch die Klemmkraft zu. Die Tellerfeder kann auch einseitig oder zweiseitig geschlitzt sein.

Bei bekannten Steckverbindern wurde als Material für das zweite Klemmelement bisher stets ein Metall oder eine Metalllegierung gewählt. Dies liegt daran, daß die bei der Verklemmung des Rohrabschnitts auftretenden starken Radialkräfte ausschließlich von dem zweiten Klemmelement aufgenommen werden mußten. In Weiterbildung der Erfindung wird hingegen vorgeschlagen, das zweite Klemmelement in das Gehäuse einschraubbar und aus Kunststoff auszubilden. Die bei der Verklemmung auftretenden Radialkräfte werden dann über das zweite Klemmelement in das (Metall-)Gehäuse eingeleitet, das diese problemlos aufnimmt. Ein Kunststoff-Klemmelement spart Gewicht und Kosten.

Vorteilhafterweise ist das Dichtmittel in Einsteckrichtung des Rohrabschnitts zwischen der Klammer und dem ersten Klemmelement angeordnet. Dieser vorteilhaften Ausführungsform liegt die Erkenntnis zugrunde, daß bei der Montage eines herkömmlichen Steckverbinders die Außenfläche des eingesteckten Rohres durch den bekannten Klemmring so stark aufgerauht bzw. verletzt wird, daß das nachfolgende Dichtelement nicht mehr ausreichend abdichtet. Insbesondere werden Längsriefen erzeugt, die schwer abzudichten sind. Es reichen bereits geringfügige Aufrauhungen in der Oberfläche, um die Dichtwirkung negativ zu beeinflussen. Besonders kritisch ist dies bei Rohren mit außen aufgebrachten Schutzschichten, wie z.B. Diffusionsschutzschichten oder Schutzschichten gegen die Umgebung oder chemisch aggressive Substanzen. Bei bekannten Steckverbindern ist eine derartige Verletzung der Außenfläche zwangsläufig eine Folge der Montage, da - wie eingangs erwähnt - das erste Klemmelement von Anfang an einen hohen Reibwiderstand zur Verfügung stellen muß. Bei der bevorzugten Ausführungsform hingegen passiert das Einsteckende des Rohrabschnitts zuerst das Dichtmittel, bevor es in Eingriff mit der Klammer gelangt. Da das erste Klemmelement "locker" oder nur mit geringer Vorspannung über den Rohrabschnitt gleitet, wird eine Beschädigung im kritischen Bereich - das ist derjenige Bereich, in dem die Dichtung gegen das Rohr abdichtet - vermieden. Erst bei anschließendem Eintritt des Rohrabschnitts in die Klammer findet eine (völlig unkritische) Verletzung der Außenfläche statt. Das Dichtmittel kommt also in jedem Fall auf der "glatten" Oberfläche der Rohr-Endabschnitts zur Anlage. Auch mögliche Beschädigungen von auf Rohren aufgebrachten Schutzschichten bleiben innerhalb des abgedichteten Bereichs und sind damit unkritisch.

Beim Herausziehen des Rohrabschnitts wird - wie gesagt - die anfängliche (Initial-)Klemmkraft ausschließlich von der Klammer zur Verfügung gestellt. Beim Herausziehen wird das Dichtmittel zwischen der Klammer und dem ersten Klemmelement so zusammengedrückt, daß es eine ovale Form annimmt und sich mit steigender Zugkraft zunehmend gegen das Rohr und die Innenwand des Steckverbinders drückt. Diese zusätzliche Verpressung des Dichtmittels erfolgt nur bis zum Punkt der Kraftübernahme auf das erste Klemmelement. Bei einem hohen Innendruck im Steckverbinder und im Rohr ist also stets auch eine gute und zuverlässige Abdichtung bei gleichzeitiger Schonung des Dichtmittels gewährleistet.

Eine konstruktiv einfache Ausführungsform der Erfindung ergibt sich dadurch, daß das Gehäuse einen ersten Aufnahmeabschnitt mit im wesentlichen konstantem Innendurchmesser zur Aufnahme mindestens der Klammer, des Dichtmittels und mindestens eines Teilbereichs des ersten Klemmelements aufweist und daß der erste Aufnahmeabschnitt in einen zweiten Aufnahmeabschnitt zur Aufnahme des eingesteckten Rohrabschnitts übergeht, der einen im wesentlichen konstanten, kleineren Durchmesser als der erste Aufnahmeabschnitt und einen Anschlag für den Rohrabschnitt aufweist.

Die Klammer, das Dichtmittel und das erste Klemmelement (ggf. auch eine Aufnahme für das zweite Klemmelement) sind im ersten Aufnahmeabschnitt aufgenommen. Der zweite Aufnahmeabschnitt dient zur Aufnahme und Zentrierung des eingesteckten Rohres. Mit anderen Worten, der Steckverbinder ist leicht und wirtschaftlich herzustellen und auf einfache Weise zusammenzusetzen, und er genügt dennoch hinsichtlich Dichtigkeit und Klemmkraft höchsten Ansprüchen.

Wie bereits eingangs erwähnt, findet der Steckverbinder bei flüssigen und gasförmigen Medien Einsatz. Bei gasförmigen Medien kann es vorteilhaft sein, daß der Rohrabschnitt (also das einzusteckende Rohr) ein einsteckbares Hülsenelement aufweist. Das Hülsenelement verstärkt das Ende des Rohrabschnitts, so daß keine Gefahr besteht, daß es deformiert wird und damit die Dichtigkeit nachläßt.

Vorzugsweise ist der Steckverbinder in ein Fittingprogramm integriert, und zwar inbesondere als Bestandteil einer Absperr- oder Anbohrarmatur. Das Fittingprogramm kann beispielsweise auch Anschlußbrücken, Bögen, Winkel oder T-Stücke umfassen. Durch die Einsparung von sonst notwendigen Verbindungselementen zwischen Steckverbinder und Armatur ergeben sich nicht nur Kostenvorteile auf Seiten des Herstellers und der Anwender (Montagekosten), sondern auch eine kürzere Baulänge.

Die Erfindung wird im folgenden unter Bezugnahme auf die beiliegende Zeichnung näher erläutert.
Figur 1 zeigt in einer teilweise geschnittenen Ansicht ein erstes Ausführungsbeispiel des erfindungsgemäßen Steckverbinders;
Figur 2 zeigt die Tellerfeder aus Figur 1 in einer vergrößerten Draufsicht;
Figur 3 zeigt in einer teilweise geschnittenen Darstellung ein zweites Ausführungsbeispiel des erfindungsgemäßen Steckverbinders; und
Figur 4 zeigt ein Ausführungsbeispiel eines Rohrabschnitts zum Einstecken in den erfindungsgemäßen Steckverbinder.

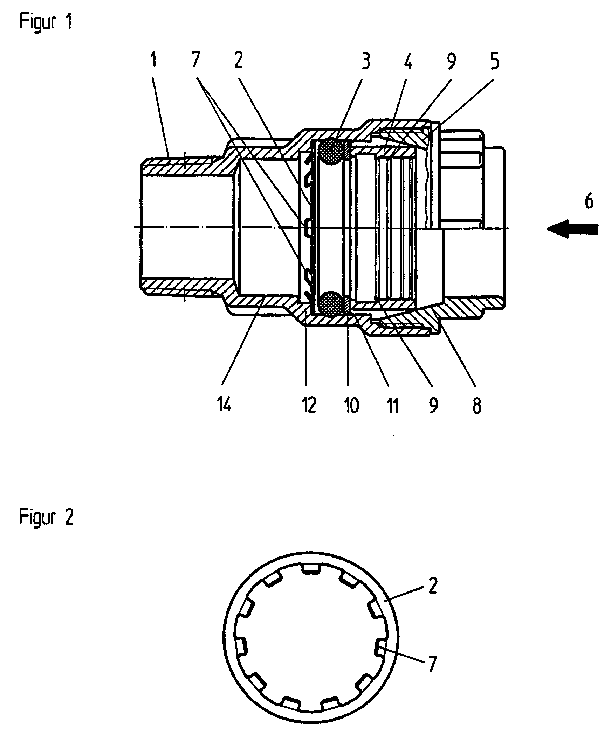

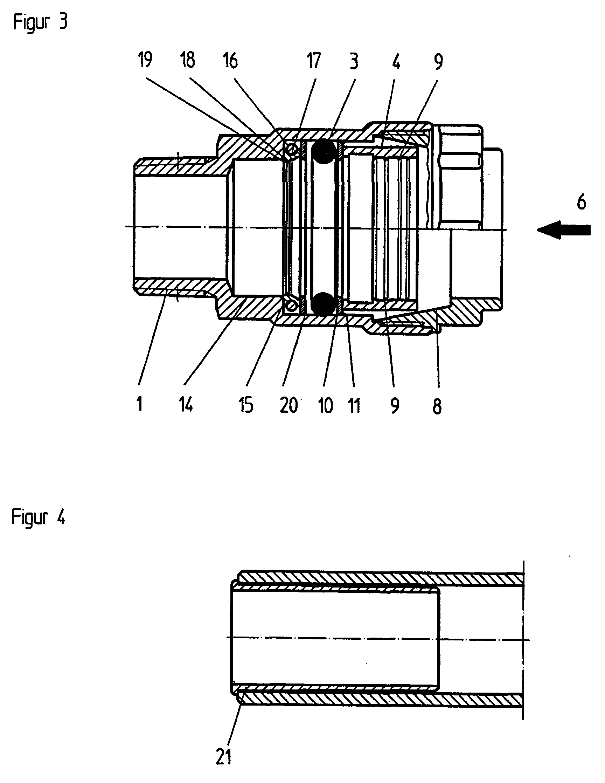

Der Steckverbinder gemäß Figur 1 weist ein Gehäuse 1 auf, in das ein Rohrabschnitt (siehe Figur 4) einsteckbar ist. Das Gehäuse weist eine als Tellerfeder 2 ausgebildete Klammer, eine Dichtung 3 in Form eines O-Rings, ein erstes Klemmelement 4 und ein zweites Klemmelement 5 auf, das in Gewindeeingriff mit dem Gehäuse 1 steht. Der Rohrabschnitt (eines Kunststoffrohres) wird zur Verbindung mit dem Steckverbinder in Pfeilrichtung 6 in diesen eingesteckt und passiert nacheinander die folgenden Bauteile: zweites Klemmelement 5, erstes Klemmelement 4, Dichtung 3 und Tellerfeder 2. Die Tellerfeder 2 (siehe auch Figur 2) weist Zähne 7 auf, die in Einsteckrichtung 6 des Rohres angestellt sind und beim Einstecken federnd nachgeben. Durch die Anstellung der Zähne 7 ist das Rohr leicht in den Steckverbinder einführbar. Beim Herausziehen des Rohres verklemmen sie hingegen mit dem Rohr.

Die Innendurchmesser der Klemmelemente 4 und 5 sind größer oder in etwa gleich groß wie der Außendurchmesser des einzuschiebenden Rohres, d. h. sie üben keine oder nur eine geringe Kraft auf das Kunststoffrohr aus. Beim Einstecken des Kunststoffrohres erfolgt eine Klemmung erst durch die Tellerfeder 2. Die beim Durchschieben des Rohres durch die Tellerfeder 2 entstehenden Beschädigungen, wie z. B. Kratzer auf der Außenfläche des Kunststoffrohres, beeinflussen die Dichtwirkung der Dichtung 3 nicht, da sie in Einsteckrichtung hinter der Dichtung auftreten. Der Innendurchmesser des Klemmelements 4 ist auf jeden Fall so gewählt, daß er die Außenfläche des Kunststoffrohres beim Einstecken nicht verletzt.

Der dargestellte Steckverbinder gewährleistet eine gute Dichtigkeit bei gleichzeitiger guter mechanischer Zugfestigkeit. Wie bereits erläutert, sind die Zähne 7 der Tellerfeder 2 in Einsteckrichtung 6 des Rohres angestellt, d. h. sie gestatten ein leichtes Einstecken des Rohres. Durch die Anstellung der Zähne 7 wird bei einem Zug des Rohres entgegen der Einsteckrichtung 6 ein zuverlässiger Eingriff der Zähne 7 in die Außenseite des Kunststoffrohres und damit ein sicherer Halt des Kunststoffrohres im Steckverbinder gewährleistet. Die Zähne 7 "verkrallen" sich mit zunehmender Ausziehkraft in den Kunststoff.

Der überwiegende Teil der Klemmkraft wird von dem Klemmelement 4 übernommen. Die Tellerfeder 2 hat insoweit eher eine "einleitende" Funktion, als sie sich beim Herausziehen (oder beispielsweise bei einem starken Überdruck im Rohrsystem) mit dem Rohr entgegen der Einsteckrichtung 6 bewegt und über die Dichtung 3 das Klemmelement 4 in Richtung der Verjüngung eines Konus 8 des Klemmelements 5 drängt. Der Konus 8 sorgt für ein Zusammendrücken des Klemmelements 4. Auf der Innenfläche des Klemmelements 4 angeordnete zahnartige Vorsprünge 9 greifen mit zunehmender Bewegung des Klemmelements 4 entgegen der Einsteckrichtung 6 des Rohres in die Außenfläche des Kunststoffrohres ein. Mit anderen Worten, je höher die Kraft zum Herausziehen des Rohres ist, desto höher wird auch die Klemmkraft des Klemmelements 4.

Ein weiterer günstiger Effekt besteht darin, daß bei zunehmender Zugkraft die Dichtigkeit zunimmt. Wie zuvor beschrieben, bewegt sich die Tellerfeder 2 in Richtung auf die Dichtung 3 und drückt diese derart zusammen, daß sie sich in Radialrichtung nach außen und innen ausdehnt. Besonders bei hohen Innendrücken im Rohrsystem, die das Rohr aus dem Steckverbinder treiben können, ist eine zunehmende Dichtigkeit bei steigendem Druck von erheblichem Vorteil. Darüber hinaus hat die Einleitung der Klemmwirkung des Klemmelements 4 über die Tellerfeder 2 den großen Vorteil, daß der über die Tellerfeder 2 auf die Dichtung 3 aufgebrachte maximale Anpreßdruck begrenzt ist. Mit zunehmender Zugbelastung des Einsteckrohres übernimmt nämlich das Klemmelement 4 die Klemmwirkung, so daß eine Überbelastung oder ggf. sogar eine Zerstörung des Elastomer-Werkstoffes der Dichtung 3 vermieden wird. Im übrigen ist bei dem dargestellten Steckverbinder zwischen der Dichtung 3 und dem Klemmelement 4 eine Zwischenscheibe 10 angeordnet, die eine größere Anlagefläche für die Dichtung 3 bietet als das Klemmelement und damit ebenfalls zur Schonung der Dichtung beiträgt.

Die Konstruktion des erfindungsgemäßen Steckverbinders ist sehr einfach. Die Tellerfeder 2, die Dichtung 3, die Zwischenscheibe 10 und ein Teil des Klemmelements 4 sind in einer Bohrung 11 aufgenommen. Die Tellerfeder 2 stützt sich an einem Vorsprung 12 ab. Die Höhe des Vorsprungs 12 bietet den Zähnen 7 eine ausreichende Bewegungsfreiheit beim Einstecken des Rohres. An die Bohrung 11 schließt sich eine zweite Bohrung 14 mit kleinerem Durchmesser an, die das Ende des eingesteckten Rohres aufnimmt.

Figur 3 zeigt ein alternatives Ausführungsbeispiel des erfindungsgemäßen Steckverbinders. Statt der Tellerfeder 2 in Figur 1 ist als Klammer ein geschlitzter Klemmring 15 vorgesehen, der an seinem Außenumfang einen Drahtring 16 zur Aufbringung der Vorspannung trägt. Der Klemmring 15 weist zwei geneigte Innenflächen 17 und 18 auf, die unter Bildung einer scharfen Kante 19 zusammenlaufen. Die Innenfläche 18 ist steiler angestellt als die Innenfläche 17, so daß der Widerstand des Klemmrings 15 beim Einführen des Rohres geringer ist als beim Herausziehen. Zwischen der Dichtung 3 und dem Klemmring 15 ist eine Scheibe 20 zur besseren Anlage des Klemmrings 15 an der Dichtung und damit deren Schonung angeordnet.

Figur 4 zeigt das Ende eines Kunststoffrohres, wie es beispielsweise bei gasförmigen Medien zum Einsatz kommen kann. Zur Verstärkung des Endbereichs des Rohres ist eine Hülse 21 in das Kunststoffrohr eingesteckt. Auch bei hoher Klemmkraft der Klammer oder des Klemmelements 4 besteht nicht die Gefahr einer Deformierung des Kunststoffrohres. In aller Regel reichen jedoch unverstärkte Kunststoffrohre aus.

Im Rahmen des Erfindungsgedankens sind durchaus Abwandlungen möglich. So ist die Tellerfeder 2 nicht auf die dargestellte Form festgelegt. Vielmehr umfaßt die Erfindung jegliche Form von Tellerfedern, die sich zur Einspannung des Kunststoffrohres eignen, wie beispielsweise auch beidseitig geschlitzte Tellerfedern. Auch andere Formen der Klammer sind denkbar. Z.B. ist auch eine Klemmung durch Formschluß ("Einklipsen") denkbar. Ferner ist der Einsatz des Steckverbinders nicht ausschließlich auf Kunststoffrohre beschränkt. Vielmehr kommen alle Rohre in Betracht, die eine relativ weiche Außenfläche aufweisen, wie z. B. auch Verbundrohre (z. B. mit einer Kunststoff-Außenfläche). Schließlich sind auch Alternativen zu der Klemmutter 5 von der Erfindung umfaßt. Als gleichwertig wird alternativ zu einem Gewindeeingriff beipielsweise ein bajonett-artiger Eingriff gesehen. Selbstverständlich kann der erfindungsgemäße Steckverbinder auch am Ende eines Rohres ausgebildet sein, wenn auch die dargestellte Form als Einzelbauteil als besonders vorteilhaft angesehen wird.

## Patentansprüche

1. Steckverbinder für Kunststoffrohre, mit
- einem Gehäuse (1), in das ein Rohrabschnitt einsteckbar ist,
- einem Dichtmittel (3), das bei eingestecktem Rohrabschnitt zwischen dem Gehäuse und dem Rohrabschnitt angeordnet ist, und
- einem radial inneren Klemmelement (4) und einem radial äußeren Klemmelement (5), wobei der Rohrabschnitt durch das innere Klemmelement hindurchführbar und durch Bewegung des inneren Klemmelements in Richtung auf das äußere Klemmelement im Gehäuse (1) fixierbar ist,
**dadurch gekennzeichnet**,
- da**ß** in Einsteckrichtung hinter den Klemmelementen (4, 5) eine Klammer (2) angeordnet ist, durch die der Rohrabschnitt derart in Einsteckrichtung zumindest teilweise hindurchführbar ist, daß die Klammer an der Außenwandung des Rohrabschnitts angreift, und
- daß die Klammer (2) bei einer Bewegung mit dem Rohrabschnitt entgegen der Einsteckrichtung eine axiale Kraft auf das radial innere Klemmelement (4) überträgt und dieses dabei gegen das äußere Klemmelement (5) derart verschiebt, daß das innere Klemmelement (4) radial zusammengedrückt wird und damit der Rohrabschnitt (1) im Gehäuse fixiert wird.

2. Steckverbinder nach Anspruch 1, **dadurch gekennzeichnet, daß** die Klammer (2) einer Bewegung des Rohrabschnitts in Einsteckrichtung einen geringeren Widerstand entgegensetzt als einer Bewegung in Ausziehrichtung.

3. Steckverbinder nach Anspruch 1 oder 2, **dadurch gekennzeichnet, daß** die Klammer (2) tellerfederartig ausgebildet ist.

4. Steckverbinder nach einem der Ansprüche 1 bis 3, **dadurch gekennzeichnet, daß** das äußere Klemmelement (5) aus Kunststoff besteht.

5. Steckverbinder nach einem der Ansprüche 1 bis 4, **dadurch gekennzeichnet, daß** das Dichtmittel (3) in axialer Richtung zwischen der Klammer (2) und dem inneren Klemmelement (4) angeordnet ist.

6. Steckverbinder nach einem der Ansprüche 1 bis 5, **dadurch gekennzeichnet,**
- **daß** das Gehäuse (1) einen ersten Aufnahmeabschnitt (11) mit im wesentlichen konstantem Innendurchmesser zur Aufnahme mindestens der Klammer (2), des Dichtmittels (3) und mindestens eines Teilbereichs des inneren Klemmelements (4) aufweist und
- **daß** der erste Aufnahmeabschnitt (11) in einen zweiten Aufnahmeabschnitt (14) zur Aufnahme des eingesteckten Rohrabschnitts übergeht, der einen im wesentlichen konstanten und kleineren Innenradius als der erste Aufnahmeabschnitt hat, vorzugsweise einen Anschlag für den Rohrabschnitt aufweist.

7. Fittingprogramm mit einem Steckverbinder nach einem der Ansprüche 1 bis 6, insbesondere als Bestandteil einer Absperr- oder Anbohrarmatur.

8. Fittingprogramm nach Anspruch 7 mit einem in das Gehäuse (1) des Steckverbinders einsteckbaren und im Gehäuse fixierbaren Rohrabschnitt, wobei in den Rohrabschnitt ein Hülsenelement (21) zur Verstärkung des Rohrabschnitts eingesetzt ist.

## Claims

1. Plug-in connector for plastics pipes, with
- a housing (1) into which one pipe section can be inserted,
- a sealing means (3) which is disposed between the housing and the pipe section when the pipe section is inserted, and
- a radially inner clamping element (4) and a radially outer clamping element (5), wherein the pipe section can be passed through the inner clamping element and can be fixed in the housing (1) by movement of the inner clamping element in the direction of the outer clamping element,
**characterised in that**
- behind the clamping elements (4, 5) in the direction of insertion there is disposed a clip (2) through which the pipe section can be at least partially guided in the direction of insertion in such a way that the clip engages on the outer wall of the pipe section, and
- when the clip (2) moves with the pipe section counter to the direction of insertion it exerts an axial force on the radially inner clamping element (4) and moves this latter against the outer clamping element (5) in such a way that the inner clamping element (4) is radially compressed and thus the pipe section (1) is fixed in the housing.

2. Plug-in connector as claimed in Claim 1, **characterised in that** the clip (2) opposes a lesser resistance to a movement of the pipe section in the direction of insertion than to a movement in the direction of extraction.

3. Plug-in connector as claimed in Claim 1 or 2, **characterised in that** the clip (2) is constructed as a disc spring.

4. Plug-in connector as claimed in any one of Claims 1 to 3, **characterised in that** the outer clamping element (5) is made from plastics material.

5. Plug-in connector as claimed in any one of Claims 1 to 4, **characterised in that** the sealing means (3) is disposed in the axial direction between the clip (2) and the inner clamping element (4).

6. Plug-in connector as claimed in any one of Claims 1 to 5, **characterised in that**
- the housing (1) has a first receptacle portion (11) with a substantially constant internal diameter for receiving at least the clip (2), the sealing means (3) and at least a part-region of the inner clamping element (4), and
- the first receptacle portion (14) merges into a second receptacle portion (14) for receiving the inserted pipe section which has a substantially constant internal radius which is smaller than the internal radius of the first receptacle portion, preferably an abutment for the pipe section.

7. Range of fittings with a plug-in connector as claimed in any one of Claims 1 to 6, in particular as a component of a shut-off or drilling fitting.

8. Range of fittings as claimed in Claim 7 with a pipe section which can be inserted into the housing (1) of the plug-in connector and can be fixed in the housing, wherein a bush element (21) for reinforcement of the pipe section is inserted into the pipe section.

## Revendications

1. Raccord à enficher pour tubes en matière plastique, comportant :
- un boîtier (1) dans lequel une portion de tube peut être enfichée,
- une garniture d'étanchéité (3), qui est agencée entre le boîtier et la portion de tube, lorsque la portion de tube est en position enfichée,
- un élément de serrage radialement intérieur (4) et un élément de serrage radialement extérieur (5), la portion de tube pouvant passer à travers l'élément de serrage intérieur et pouvant être bloquée dans le boîtier (1) par un mouvement de l'élément de serrage intérieur en direction de l'élément de serrage extérieur,
**caractérisé**
- **en ce que** derrière les éléments de serrage (4, 5), par référence au sens d'enfichage, est agencée une pince (2) à travers laquelle la portion de tube est apte à passer au moins partiellement de telle sorte que la pince est appliquée contre la paroi extérieure de la portion de tube, et
- **en ce que** la pince (2), en cas de mouvement avec la portion de tube, transmet une force axiale, exercée dans le sens opposé au sens d'enfichage, sur l'élément de serrage radialement intérieur (4) et, dans ce cas, déplace celui-ci contre l'élément de serrage extérieur (5) de telle sorte que l'élément de serrage intérieur (4) est comprimé dans le sens radial et bloque donc la portion de tube dans le boîtier (1).

2. Raccord à enficher selon la revendication 1, **caractérisé en ce que** la pince (2) oppose à un mouvement de la portion de tube une résistance plus faible dans le sens d'enfichage que dans le sens d'extraction.

3. Raccord à enficher selon la revendication 1 ou 2, **caractérisé en ce que** la pince (2) est conçue en forme de ressort Belleville.

4. Raccord à enficher selon l'une quelconque des revendications 1 à 3, **caractérisé en ce que** l'élément de serrage extérieur (5) est réalisé en matière plastique.

5. Raccord à enficher selon l'une quelconque des revendications 1 à 4, **caractérisé en ce que** la garniture d'étanchéité (3) est agencée dans le sens axial entre la pince (2) et l'élément de serrage intérieur (4).

6. Raccord à enficher selon l'une quelconque des revendications 1 à 5,
**caractérisé**
- **en ce que** le boîtier (1) comporte une première partie de réception (11), ayant un diamètre intérieur sensiblement constant et destinée à recevoir au moins la pince (2), la garniture d'étanchéité (3) et au moins une zone partielle de l'élément de serrage intérieur (4), et
- **en ce que** la première partie de réception (11) se prolonge par une deuxième partie de réception (14), qui est destinée à recevoir la portion de tube enfichée et qui a un rayon intérieur sensiblement constant et plus petit que celui de la première partie de réception et comporte de préférence une butée pour la portion de tube.

7. Plan de raccordement avec un raccord à enficher selon l'une quelconque des revendications 1 à 6, en particulier en tant que partie intégrante d'un robinet d'arrêt ou d'une soupape de perce-tuyaux.

8. Plan de raccordement selon la revendication 7, comportant une portion de tube pouvant être enfichée dans le boîtier (1) du raccord à enficher et être bloquée dans le boîtier, dans lequel un élément de type manchon (21), destiné à renforcer la portion de tube, est inséré dans la portion de tube.
